# EUROPEAN PATENT APPLICATION

(11) **EP 4 783 627 A1**
(43) Date of publication of application: **29.07.2026**
(21) Application number: 24866936.8
(22) Date of filing: 11.06.2024
(51) Int. Cl.: H04W 4/80, H04W 36/00

(54) **WIRELESS SENSING METHOD AND APPARATUS**

(30) Priority: 21.09.2023 CN 202311228210
(71) Applicant: Lenovo (Beijing) Limited, Beijing 100085 (CN)
(72) Inventor: WANG, Jianfeng, Beijing 100085 (CN); LIU, Luning, Beijing 100085 (CN); WANG, Haiming, Beijing 100085 (CN)
(74) Representative: Boult Wade Tennant LLP
(86) International application number: PCT/CN2024/098350
(87) International publication number: WO 2025/060516

(57) **Abstract**

The present application provides a wireless sensing method and apparatus. A first management node within a first communication domain in a wireless short-range communication system obtains sensing information sent by a second management node within a second communication domain, and on the basis of the sensing information, configures sensing configuration information for a managed node within the first communication domain. On the basis of the sensing configuration information configured for the managed node, the first management node receives or sends a sensing signal for sensing a target object.

## Description

### CROSS-REFERENCE TO RELATED APPLICATIONS

This application claims priority to Chinese Patent Application No. 202311228210.1, titled "WIRELESS SENSING METHOD AND APPARATUS", filed on September 21, 2023 with the China National Intellectual Property Administration, the entire contents of which are incorporated herein by reference.

### TECHNICAL FIELD

The present disclosure generally relates to the field of communication technologies and, more particularly, to a wireless sensing method and apparatus.

### BACKGROUND

Short-range wireless communication technology offers wireless transmission capabilities to meet various short-range service requirements and has advantages such as relatively low power consumption.

As wireless sensing technology continues to develop, future wireless sensing services will need to be implemented using short-range wireless communication. In short-range wireless communication, a management node configures resources for transmitting a sensing signal to managed nodes participating in sensing and issues corresponding configuration signaling, enabling both the management node and the managed nodes to receive or transmit the sensing signal based on the configuration signaling. However, if a managed node participating in wireless sensing moves from a current communication domain to a communication domain of another management node, or if a sensing target moves from one communication domain to another, the management node in that communication domain will be unable to continue performing the wireless sensing task, resulting in a wireless sensing interruption.

### SUMMARY

In one aspect, there is provided a wireless sensing method applied to a first management node in a wireless short-range communication system and located within a first communication domain. The method includes obtaining sensing information transmitted by a second management node within a second communication domain and used to sense a target object currently being sensed by the second management node, configuring sensing configuration information for one or more managed nodes in the first communication domain based on the sensing information, and receiving or sending a sensing signal for sensing the target object based on the sensing configuration information.

In an embodiment, obtaining the sensing information includes: obtaining sensing target information transmitted by the second management node, the sensing target information including state information of the target object; and configuring the sensing configuration information includes: configuring the sensing configuration information for the one or more managed nodes based on the state information of the target object.

In an embodiment, configuring the sensing configuration information for the one or more managed nodes based on the state information of the target object includes: determining at least one managed node within the first communication domain that participates in sensing the target object based on the state information of the target object; and configuring the sensing configuration information for the at least one managed node.

In an embodiment, the wireless sensing method further includes: obtaining sensing enable information transmitted by the second management node, the sensing enable information instructing the first management node to sense the target object; and in response to the sending enable information, sending a response confirmation instruction to the second management node, the response confirmation instruction indicating that the first management node agrees to sense the target object, where the sensing target information is transmitted by the second management node after obtaining the response confirmation instruction.

In an embodiment, the wireless sensing method further includes: sending a sensing task confirmation instruction to the second management node, to enable the second management node to release resources used for sensing the target object, the sensing task confirmation instruction indicating that the first management node has completed configuration of the sensing configuration information.

In an embodiment, obtaining the sensing information includes: obtaining historical sensing configuration information transmitted by the second management node, the historical sensing configuration information being configured by the second management node for a target managed node that historically accesses the second communication domain; and configuring the sensing configuration information includes: configuring the sensing configuration information for the target managed node within the first communication domain based on the historical sensing configuration information.

In an embodiment, the wireless sensing method further includes: obtaining a node access request transmitted by the target managed node that historically accesses the second communication domain, the node access request being used to request a node participating in sensing the target object to access the first management node.

In an embodiment, the node access request further indicates the second management node to which the target managed node currently belongs; the wireless sensing method further includes: in response to confirming that the target managed node successfully accesses the first management node, sending an access success instruction to the second management node; and obtaining the historical sensing configuration information includes: obtaining the historical sensing configuration information transmitted by the second management node in response to the access success instruction.

In an embodiment, the node access request further indicates a sensing capability of the target managed node; and configuring the sensing configuration information includes: configuring the sensing configuration information for the target managed node based on the historical sensing configuration information and the sensing capability of the target managed node.

In another aspect, there is further provided a wireless sensing method applied to a second management node in a wireless short-range communication system and located within a second communication domain. The method includes receiving or transmitting, within the second communication domain, a sensing signal for sensing a target object, and sending sensing information to a first management node within a first communication domain to enable the first management node to sense the target object within the first communication domain, the sensing information being used to sense the target object.

In an embodiment, sending sensing information to the first management node within the first communication domain includes: detecting that the target object enters the first communication domain of the first management node; and sending the sensing target information to the first management node, the sensing target information including state information of the target object.

In an embodiment, the wireless sensing method further includes: receiving a sensing task confirmation instruction transmitted by the first management node, the sensing task confirmation instruction indicating that the first management node completes the configuration of the sensing configuration information; and in response to the sensing task confirmation instruction, releasing the sensing resources in the second communication domain used for sensing the target object.

In an embodiment, the wireless sensing method further includes: sending sensing enable information to the first management node, the sensing enable information instructing the first management node to sense the target object; and sending the sensing target information to the first management node includes: obtaining a response confirmation instruction returned by the first management node in response to the sensing enable information; and sending the sensing target information to the first management node, the response confirmation instruction indicating that the first management node agrees to sense the target object.

In an embodiment, sending the sensing information to the first management node within the first communication domain includes: detecting that the link quality between a target managed node and the first management node within the first communication domain is better than the link quality between the target managed node and the second management node; and sending historical sensing configuration information to the first management node, the target managed node being a managed node within the second communication domain that participates in sensing the target object, the historical sensing configuration information being the sensing configuration information configured by the second management node for the target managed node for sensing the target object.

In an embodiment, the wireless sensing method further includes: sending a new domain access instruction to the target managed node when it detects that the link quality between the target managed node and the first management node is better than the link quality between the target managed node and the second management node, the new domain access instruction instructing the target managed node to connect to the first management node within the first communication domain; and sending historical sensing configuration information to the first management node includes: detecting an access success instruction transmitted by the first management node; and sending the historical sensing configuration information to the first management node, the access success instruction indicating that the target managed node is connected to the first management node.

In another aspect, there is further provided a management node within a first communication domain. The management node includes a processor and a transceiver. The transceiver is configured to obtain sensing information transmitted by a second management node within a second communication domain, the sensing information being used to sense a target object currently being sensed by the second management node. The processor is configured to configure sensing configuration information for one or more managed nodes in the first communication domain based on the sensing information. The transceiver is further configured to receive or send a sensing signal for sensing the target object based on the sensing configuration information.

In another aspect, there is further provided a management node within a second communication domain. The management node includes a processor and a transceiver. The transceiver is configured to: receive or transmit the sensing signal for sensing the target object within the second communication domain; and, under the control of the processor, to transmit sensing information to the first management node within the first communication domain, the sensing information being used to sense the target object, enabling the first management node to sense the target object within the first communication domain.

### BRIEF DESCRIPTION OF THE DRAWINGS

To more clearly illustrate the technical solutions in the embodiments of this application, the drawings required for describing the embodiments will be briefly introduced below. It is evident that the drawings described below are merely examples of this application. For those skilled in the art, other drawings may be obtained based on the provided drawings without requiring creative labor.
FIG. 1 is a flow chart of a wireless sensing method executed at a first management node consistent with embodiments of the present disclosure.
FIG. 2 is a flow chart of a wireless sensing method executed at a second management node consistent with embodiments of the present disclosure.
FIG. 3 is a schematic diagram showing a scenario for performing wireless sensing of a sensing target in a communication domain consistent with embodiments of the present disclosure.
FIG. 4 is a schematic diagram showing a scenario where a sensing target in FIG. 3 moves from one communication domain to another communication domain consistent with embodiments of the present disclosure.
FIG. 5 is a flow chart of a wireless sensing method in a first application scenario consistent with embodiments of the present disclosure.
FIG. 6 is another flow chart of a wireless sensing method in a first application scenario consistent with embodiments of the present disclosure.
FIG. 7 is a schematic diagram showing a scenario where a managed node in FIG. 3 participating in sensing the sensing target in a communication domain moves from the communication domain to another communication domain, consistent with embodiments of the present disclosure.
FIG. 8 is a flow chart of a wireless sensing method in a second application scenario consistent with embodiments of the present disclosure.
FIG. 9 is another flow chart of a wireless sensing method in a second application scenario consistent with embodiments of the present disclosure.
FIG. 10 is a schematic structural diagram of a management node consistent with embodiments of the present disclosure.
FIG. 11 is a schematic structural diagram of another management node consistent with embodiments of the present disclosure.
FIG. 12 is a schematic structural diagram of an electronic device consistent with embodiments of the present disclosure.

### DETAILED DESCRIPTION OF THE EMBODIMENTS

The present disclosure can be applied to a short-range wireless communication system to reduce wireless sensing interruptions while achieving wireless sensing based on the short-range wireless communication system.

In the present disclosure, the short-range wireless communication system may be a communication system based on any short-range wireless communication technology. The short-range wireless communication system may have various possibilities, such as a short-range wireless communication system supporting low-power communication technology, or other types of short-range wireless communication systems, etc., and the present disclosure does not have any limitations on this.

In the present disclosure, nodes in the short-range wireless communication system may include a management node and at least one managed node. A wireless network connection may be established between the management node and the at least one managed node. The management node and the at least one managed node may work together to complete specific communication functions, and the management node and the connected at least one managed node may together form a communication domain.

For example, a communication domain may be an area within which the management node is able to communicate with the at least one managed node, and the management node may be able to manage and control each managed node within its communication domain.

The short-range wireless communication system may include a plurality of management nodes, and each management node may correspond to a different communication domain, and correspondingly, may manage different managed nodes.

For example, in some short-range wireless communication systems, a management node may be called a G node, and a managed node may be called a T node. At any given time, a T node may only be able to access one communication domain, that is, access a G node within that communication domain. A G node may manage and control T nodes accessing its communication domain.

The solutions in the embodiments of the present disclosure will be described clearly and completely hereinafter with reference to the accompanying drawings in the embodiments of the present disclosure. It is apparent that the described embodiments are only a part of the embodiments of the present disclosure and not all of the embodiments. Based on the embodiments of the present disclosure, all other embodiments obtained by those skilled in the art without any creative work fall into the protection scope of the present disclosure.

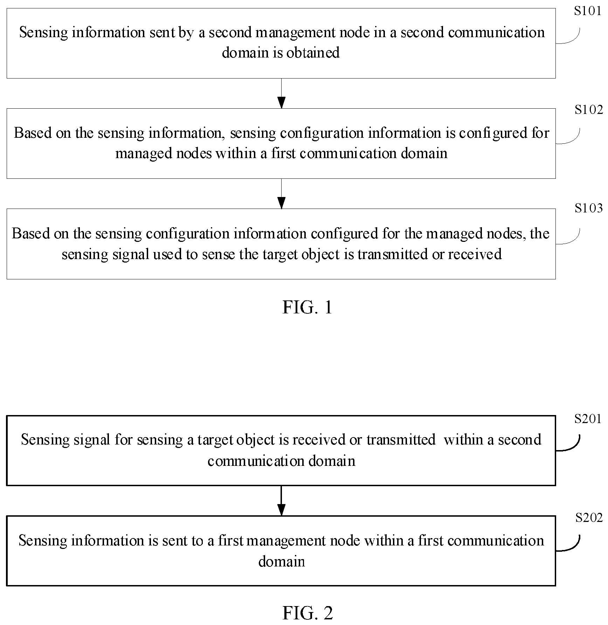

As shown in FIG. 1, which is a flowchart of a wireless sensing method provided by an embodiment of the present disclosure, the method may be applied to a first management node in a short-range wireless communication system, and the first management node may be located in a first communication domain. In this embodiment, the method may include S101 to S103.

At S101, sensing information transmitted by a second management node in a second communication domain is obtained.

The sensing information may be used to sense a target object, which is an object currently being sensed by the second management node, that is, an object that the second management node needs to sense using wireless sensing. It can be understood that the target object to be sensed in wireless sensing may also be called a sensing target. In the present disclosure, the second management node sending sensing information to the first management node may indicate that the second management node needs to transfer its wireless sensing task to the first management node, such that the first management node is able to continue to wirelessly sense the target object.

At S102, based on the sensing information, sensing configuration information is configured for managed nodes within the first communication domain.

It can be understood that the sensing information is information related to the second management node's participation in sensing the target object, and wireless sensing of the target object may be performed within the first communication domain. Combined with the sensing information, the sensing configuration information may be configured for the managed nodes within the first communication domain, enabling the management node and the managed nodes within the first communication domain to participate in wireless sensing.

The sensing configuration information configured for the managed nodes may include information required for the managed nodes to participate in sensing the target object.

For example, the sensing configuration information may include at least a signal type of the sensing signal or a transmission format of the sensing signal.

The signal type of the sensing signal may be a signal type used to transmit the sensing signal. The signal type of the sensing signal may be any of the signal types already existing in current short-range wireless communication systems, such as a probe signal or a reference signal. Of course, the signal type of the sensing signal may also be other signal types that may emerge in the future, without limitation.

The transmission format of the sensing signal may be used to indicate a wireless communication parameter for transmitting the sensing signal. The transmission format of the sensing signal may include one or more wireless communication parameters required for transmitting the sensing signal, without limitation.

For example, the transmission format of the sensing signal may include at least a frame number or a frame period.

The frame number may be a frame number of a radio frame or superframe, identifying the frame or superframe in which the sensing signal is transmitted or received. Based on this frame number, the first management node and each managed node may be able to determine within which radio frame or superframe the sensing signal is received or transmitted.

The frame period may be a period of the radio frame or superframe represented by the frame number. One frame period may include multiple radio frames or superframes, without limitation. Combining the frame period and frame number, the various time periods in which the sensing signal is transmitted may be determined, thus enabling the first management node and its managed nodes to determine at which time points the sensing signal is able to be received or transmitted.

Transmitting the sensing signal may also involve other wireless communication parameters such as frequency band or transmit power. These parameters may be preset or determined by the first management node and transmitted to the managed nodes.

Correspondingly, the transmission format of the sensing signal may include one or more of frequency band, transmit power, number of antenna ports, spatial direction selection instruction, or duration. The frequency band may be the bandwidth occupied by the transmitted sensing signal. The transmit power may be the power of the transmitted sensing signal, and the number of antenna ports may be the number of antenna ports used to receive or transmit the sensing signal. The spatial direction selection instruction may indicate the direction of transmission or reception of the sensing signal. The duration may be the total duration of the transmitted sensing signal.

Of course, the transmission format of the sensing signal may also include other wireless communication parameters as needed, and the present disclosure has no limit on this.

It is understood that if the second management node is able to participate in sensing the target object, the second communication domain of the second management node may need to at least partially overlap with the sensing area of the target object. For example, at least a portion of the sensing area of the target object may be within the coverage area of the second communication domain. Correspondingly, if the first management node is able to also perform the task of sensing the target object, the first communication domain of the first management node may need to at least partially overlap with the sensing area of the target object. Therefore, the first communication domain may be a communication domain connected to the second communication domain. For example, the first management node may be a management node within the range set by the second management node.

At S103, based on the sensing configuration information configured for the managed nodes, the sensing signal used to sense the target object is transmitted or received.

As described above, by combining the sensing configuration information configured by the first management node for each managed node, the first management node may be able to clearly define the specific transmission method of the sensing signal used to sense the target object, thereby enabling it to complete the corresponding reception or transmission of the sensing signal.

For example, by combining the signal type and transmission format of the sensing signal, the first management node and each managed node may determine when and how to receive or send the sensing signal, enabling the first management node to transmit the sensing signal with each managed node.

Whether the first management node receives or transmits the sensing signal may depend on the sensing node types configured for it. The sensing node types of the first management node may include one or more of a sensing signal receiving node or a sensing signal transmitting node.

The present disclosure does not limit how the sensing node types of the first management node are determined or the specific implementation process for transmitting or receiving the sensing signal.

In the present disclosure, after receiving the sensing information transmitted by the second management node in the second communication domain, the first management node in the first communication domain may configure the sensing configuration information for the managed nodes in the first communication domain based on the sensing information. Therefore, the managed nodes in the first communication domain and the first management node may be enabled to receive or transmit the sensing signal for sensing the target object. When an abnormal event causes the wireless sensing of the target object to cease in the second communication domain, the second management node may then send the relevant sensing information of the target object to the first management node. The first management node may then control the wireless sensing of the target object in the first communication domain, allowing the sensing task of sensing the target object to be transferred from the second communication domain to the first communication domain to continue wireless sensing of the target object. The interruptions in wireless sensing of the target object because of abnormal events may be reduced.

The wireless sensing method of the present disclosure is described below from the side of the second management node in the second communication domain.

In another embodiment, as shown in FIG. 2, which is another flowchart of the wireless sensing method provided by the present disclosure, the method may be applied to the second management node in the short-range wireless communication system, which is located in the second communication domain. The method may include S201 to S202.

At S201, the sensing signal for sensing the target object is received or transmitted within the second communication domain.

The present disclosure does not limit specific triggering conditions or specific sensing processes for the second management node to sense the target object.

For example, the second management node may receive a wireless sensing task issued by a user through an application, where the wireless sensing task is a sensing task for sensing the target object. Correspondingly, the second management node may determine the managed nodes participating in wireless sensing within the second communication domain, configure the sensing configuration information for the managed nodes, and receive or transmit the sensing signal based on the sensing configuration information configured for the managed nodes within the second communication domain.

For another example, the second management node may receive or transmit the sensing signal as shown in the embodiments of FIG. 1 after obtaining the sensing information transmitted by management nodes in other communication domains.

At S202, the sensing information is transmitted to the first management node within the first communication domain.

The sensing information may be used to sense the target object, enabling the first management node to sense the target object within the first communication domain.

In the present disclosure, the specific circumstances triggering the second management node to send the sensing information to the first management node may have different possibilities, and may be determined based on the second management node's specific sensing of the target object. The present disclosure does not have a limit on this.

It is understood that, for the first management node to participate in sensing the target object, the first communication domain of the first management node may overlap with the sensing area of the target object.

Therefore, before the second management node sends the sensing information to the first management node, the second management node may need to identify the first management node whose first communication domain overlaps with the sensing area of the target object.

The specific implementation of the second management node identifying the first management node whose communication domain overlaps with the sensing area of the target object may be varied, and the present disclosure does not have a limit on this.

For example, in the short-range wireless communication system, the second management node may interact with a neighboring management node (e.g., a management node within the maximum communication range of the second management node, or a pre-defined neighboring management node). Therefore, the second management node may determine the coverage area of the communication domain of the neighboring management node. Based on the coverage area of the communication domain of the neighboring management node and the sensing area of the target object sensed by the second management node, whether the communication domain of the neighboring management node overlaps with the sensing area of the target object may be determined. If the communication domain of the neighboring management node overlaps with the sensing area of the target object, the neighboring management node may be designated as the first management node.

Of course, in another embodiment, when the sensing task for the target object is pre-assigned to another neighboring management node besides the second management node (that is, although the neighboring management node is not responsible for executing the sensing task, it may still know the sensing area of the target object), the second management node may interact with the neighboring management node to determine whether the communication domain of the neighboring management node overlaps with the sensing area of the target object. If the communication domain of the neighboring management node overlaps with the sensing area of the target object, the neighboring management node may be designated as the first management node.

Of course, there are other possible methods for the second management node to determine the first management node, and the present disclosure does not limit this.

In the present disclosure, during the process of the second management node in the second communication domain participating in the sensing of the target object, the second management node may transmit the sensing information to the first management node in the first communication domain, which allows the first management node to wirelessly sense the target object in the first communication domain based on the sensing information. Thus, when the second management node's second communication domain is not suitable for continuing wireless sensing of the target object, the first management node in the first communication domain may be triggered to continue sensing the target object in the first communication domain, which allows the sensing task of sensing the target object to be transferred from the second communication domain to the first communication domain, reducing the possibility of the wireless sensing of the target object being interrupted because of special circumstances, and thus achieving continuous sensing of the target object.

It is understandable that the target object sensing task in the present disclosure may require a transfer from one communication domain to another in several ways. The following explanation uses two different application scenarios as examples.

In the first possible application scenario, during the wireless sensing of the target object within the second communication domain, the target object may move from the second communication domain to the first communication domain, rendering the second communication domain unsuitable for wireless sensing.

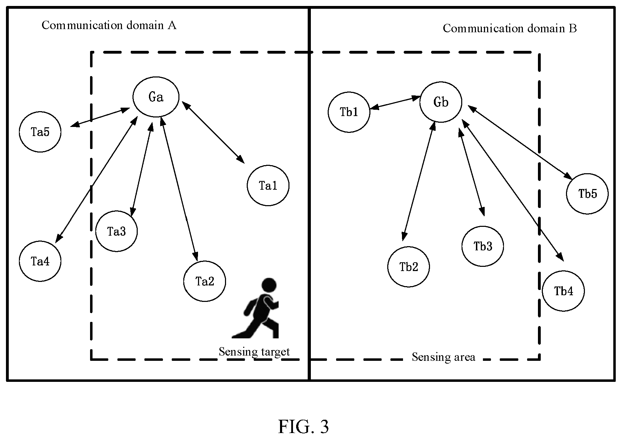

FIG. 3 illustrates an example scenario of wireless sensing of the target object in the present disclosure.

In the scenario shown in FIG. 3, the target object to be sensed is a user. This target object corresponds to a sensing area, defined by the rectangular dashed line in the figure. Part of the sensing area is located within the communication domain A, where the management node Ga (hereinafter referred to as the second management node Ga) is located, and another part is located within the communication domain B, where the management node Gb (hereinafter referred to as the first management node Gb) is located.

Five managed nodes are shown within the communication domain A of the management node Ga. These five managed nodes are the nodes in the communication domain A, excluding node Ga, shown in circles. As shown in FIG. 3, the five managed nodes within the communication domain A are denoted as Ta1, Ta2, Ta3, Ta4, and Ta5. These five managed nodes are the nodes connected to the management node Ga, and may also be referred to as the managed nodes connected to the communication domain A. Therefore, the management node Ga may manage these five managed nodes, including but not limited to obtaining information about the managed nodes, determining the managed nodes participating in wireless sensing, or configuring the sensing configuration information for the managed nodes participating in wireless sensing, etc., which will not be elaborated further.

Similarly, in the communication domain B of the management node Gb, there are also five managed nodes. As shown in FIG. 3, the five managed nodes connected to the management node Gb (the five managed nodes within the communication domain B) are denoted as Tb1, Tb2, Tb3, Tb4, and Tb5.

As shown in FIG. 3, the user, as the sensing target, is located within the communication domain A where the management node Ga is located. Wireless sensing of the sensing target is performed within the communication domain A where the management node Ga is located. At this point, the communication domain A corresponds to the second communication domain, and the management node Ga is the second management node in the present disclosure.

In this scenario, the management node Ga is able to receive or transmit the sensing signal for sensing the target object within the communication domain A. Of course, the management node Ga is also able to select and control at least some managed nodes within the communication domain A to participate in sensing the target, thereby receiving or transmitting the sensing signal. Details will not be elaborated further.

It is understandable that the target may move within the sensing area. Since the sensing area of the target overlaps with both the communication domain A and the communication domain B, when the target moves from the communication domain A to the communication domain B, the management node Ga and the managed nodes participating in the sensing within the communication domain may not be able to reliably and wirelessly sense the target.

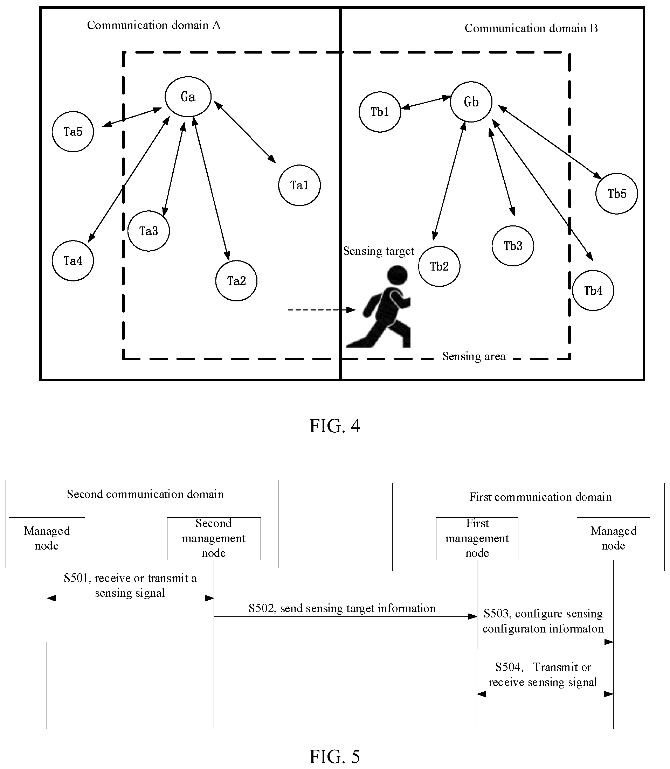

For example, comparing FIG. 3 and FIG. 4, it may be seen that when the sensing target moves from the communication domain A to the communication domain B, the sensing target may be unable to be reliably sensed within the communication domain A, and may even be undetectable.

In this scenario, to continue wirelessly sensing the sensing target, the user may need to reissue the sensing task to the management node Gb. However, since the user cannot promptly detect the sensing target's movement from the communication domain A to the communication domain B, this approach inevitably leads to an interruption in target sensing due to the inability to promptly detect the sensing target within the communication domain B, which prevents continuous target sensing even when the sensing target moves from the communication domain A to the communication domain B. Further, reconfiguring the system and instructing the management node Gb to sense the sensing target is complex and time-consuming, also inevitably leading to sensing interruption of the sensing target.

In the present disclosure, the management node Gb may be triggered to sense the sensing target by the management node Ga sending the sensing information to the management node Ga. In this scenario, the sensing information may be sensing target information, including the target object's state information.

The following description is based on the flowchart shown in FIG. 5. FIG. 5 is a flow chart of a wireless sensing method provided in this embodiment, which may be applied to a short-range wireless communication system. In this embodiment, the method may include S501 to S504.

At S501, a second management node receives or transmits, within a second communication domain, a sensing signal for sensing a target object.

In this embodiment, the specific implementation process of the second management node wirelessly sensing the target object is not limited.

For example, the second management node may obtain a sensing task instruction for sensing the target object, and in response to the sensing task instruction, determine at least one managed node within the second communication domain that participates in sensing the target object. The second management node may configure the sensing configuration information for the at least one managed node determined, and receive or transmit the sensing signal based on the sensing configuration information configured for each managed node.

At S502, the second management node detects that the target object enters the first communication domain of the first management node, and sends the sensing target information to the first management node.

The specific implementation of the second management node detecting that the target object enters the first communication domain of the first management node may have various possibilities, and the present disclosure does not limit this.

The following are examples of several possible implementations for determining whether the target object moves to the first communication domain:

In one possible embodiment, the second management node may confirm that the first communication domain overlaps with the sensing area of the target object. For example, the second management node may interact with its one neighboring management node to determine the first communication domain overlapping the sensing area of the target object and the first management node within that first communication domain. The specific implementation is not limited. Correspondingly, after detecting that the distance between the target object's location and the boundary of the first communication domain is less than a set threshold, when the target object is detected to move out of the second communication domain, it may be determined that the target object moves to the first communication domain.

In another possible embodiment, the second management node may determine the location of the first management node. Therefore, combined with the location of the first management node, when the second management node senses that the target object's location is closer to the first management node, it may be determined that the target object enters the first communication domain.

Of course, these above embodiments are two simple implementations and are used as examples only to illustrate the present disclosure. In practical applications, the second management node may also use other methods to determine whether the target object enters the first management node's first communication domain, which is not limited in the present disclosure.

In this embodiment, the sensing target information may include: the target object's state information. The target object's state information may include the state information of the target object sensed by the second management node. This state information may be determined by the second management node based on the sensing signal or sensing measurement data of the signal. For example, the target object's state information may include at least one of position, speed, or trajectory, of the target object.

In one embodiment, when the second management node detects that the target object enters the first management node's first communication domain, the second management node may first send sensing enable information to the first management node within the first communication domain. This sensing enable information may instruct the first management node to sense the target object.

Therefore, after receiving the sensing enable information, when the first management node agrees to wirelessly sense the target object, the first management node may send a response confirmation instruction to the second management node in response to the sensing enable information. This response confirmation instruction may indicate that the first management node agrees to sense the target object. Correspondingly, the second management node may send the sensing target information to the first management node after receiving this response confirmation instruction.

At S503, the first management node configures the sensing configuration information for the managed nodes within the first communication domain based on the target object's state information.

The sensing configuration information may be configuration information required for the managed nodes to participate in sensing the target object, as described above.

It is understood that not every managed node within the first communication domain is suitable for participating in sensing the target object. Therefore, to more reasonably determine suitable managed nodes within the first communication domain for participating in sensing the target object, the present disclosure may also combine the state information of the target object to determine at least one managed node within the first communication domain that will participate in sensing the target object, and then configure the sensing configuration information for each determined managed node.

For example, the first management node may obtain the location and sensing capabilities of each managed node, and then, combine the location of the target object with the location and sensing capabilities of each managed node to determine at least one managed node whose distance from the target object is less than a set threshold and whose sensing capability is sufficient to sense the target object.

It is understood that determining the managed nodes participating in sensing the target object based on the state information of the target object is merely one implementation method. In some other embodiments, the first management node may also determine at least one management node participating in sensing the target object solely based on the sensing capabilities of the managed nodes, without limitation.

It is understandable that the sensing task for sensing the target object may also include sensing quality requirements for the target object. For example, the sensing quality requirements may include the accuracy of the target object's position and velocity, without limitation.

It is also understandable that if the sensing task is transmitted to the first management node along with the second management node, the first management node may store the sensing quality requirements for the target object.

For example, when the first management node does not possess the sensing quality requirements for the target object, it may request the sensing quality requirements from the second management node and receive the requirements returned by the second management node.

Therefore, the first management node may also determine at least one managed node participating in sensing the target object by combining the sensing quality requirements. For example, by combining the sensing quality requirements with the sensing capabilities of each managed node within the first communication domain, at least one managed node participating in sensing the target object may be determined.

In practical applications, the first management node may also determine the managed nodes participating in sensing the target object within the first communication domain by combining the target object's state information and the sensing quality requirements; details will not be elaborated further.

At S504, the first management node receives or transmits the sensing signal for sensing the target object based on the sensing configuration information configured for the managed nodes within the first communication domain.

For example, after determining the managed nodes participating in sensing the target object, the first management node may configure the sensing configuration information for the determined managed nodes. Based on the sensing configuration information configured by the first management node for each determined managed node, the first management node may determine the radio frames within each radio frame period in the first communication domain that require receiving or transmitting the sensing signal. Therefore, the first management node may receive or transmit the sensing signal within the corresponding radio frames according to the relevant sensing signal transmission format.

Of course, in addition to receiving or transmitting the sensing signal, the first management node may also obtain sensing measurement data corresponding to the sensing signal transmitted by the managed nodes to determine the sensing measurement results of the target object. The present disclosure does not have limit on this.

As can be seen from the flowchart in FIG. 5, after the wirelessly sensing target object moves from the second communication domain to the first communication domain, the second management node in the second communication domain may send the state information of the target object to the first management node in the first communication domain. Therefore, the first management node in the first communication domain may configure the sensing configuration information for the managed nodes in the first communication domain based on the state information of the target object, and perform wireless sensing of the target object in the first communication domain, which allows the target object to continue to be wirelessly sensed in the first communication domain even when it moves from the second communication domain to the first communication domain, reducing the possibility of the wireless sensing of the target object being interrupted when it moves out of the current communication domain where it is being sensed.

After the first management node takes over the task of sensing the target object, if the second management node or the managed nodes in the second communication domain still maintains the relevant resources for sensing the target object, resource may be wasted.

Therefore, in one embodiment, in the first application scenario, after configuring the sensing configuration information for the managed nodes in the second communication domain, or after the first management node receives or sends the sensing signal, the first management node may also send a sensing task confirmation instruction to the second management node. This confirmation instruction may indicate that the first management node completes the configuration of the sensing configuration information.

Correspondingly, after receiving the sensing task confirmation instruction, the second management node, in response, may release the sensing resources in the second communication domain used for sensing the target object.

For example, the second management node may stop receiving and sending the sensing signal for sensing the target object. The second management node may also instruct the managed nodes in the second communication domain participating in sensing the target object to stop sensing the target object.

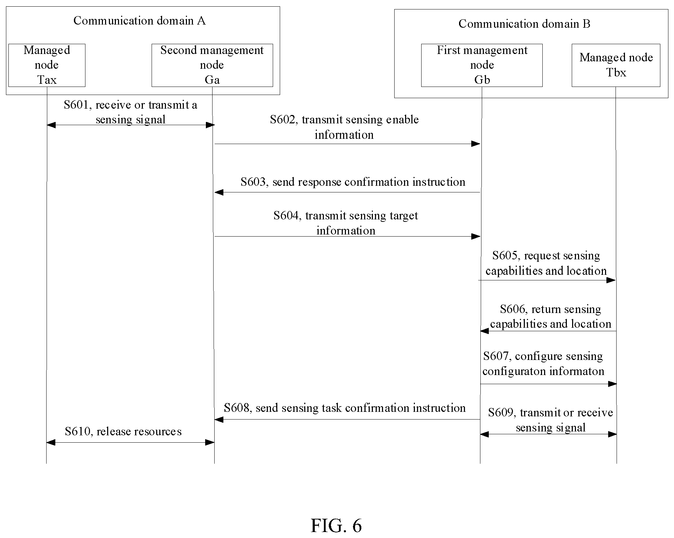

For ease of understanding, using the node G as the management node and nodes T as the managed nodes, in the scenario examples in FIG.3 and FIG. 4, the process interaction in the first scenario will be explained using a specific implementation example. FIG. 6 illustrates another flowchart of the wireless sensing method provided by another embodiment of the present disclosure, where the method of this embodiment may be applied to the short-range wireless communication system.

In the present embodiment, the method may include S601 to S610.

At S601, the second management node Ga receives or transmits, within the communication domain A, the sensing signal with each managed node participating in the sensing of the target object.

For ease of understanding, FIG. 6 uses the scenarios in FIG. 3 and FIG. 4 as examples. As shown in FIG. 3 and FIG. 4, the second management node is the management node Ga, and the second communication domain of the second management node is the communication domain A. Correspondingly, the first management node is the management node Gb, and the first communication domain is the communication domain B.

As shown in FIG. 6, taking nodes T as an example, since FIG. 6 uses the scenarios of FIG. 3 and FIG. 4 as examples, the managed nodes participating in sensing within the communication domain A may be a node Tax, which may be any one of managed nodes Ta1, Ta2, Ta3, Ta4, or Ta5.

At S602, the second management node Ga detects that the target object enters the communication domain B of the first management node Gb and sends a sensing enable message to the first management node Gb.

This sensing enable message may instruct the first management node Gb to sense the target object.

At S603, in response to the sensing enable message, the first management node Gb sends a response confirmation instruction to the second management node Ga.

This response confirmation instruction may indicate that the first management node Gb agrees to sense the target object.

At S604, in response to the response confirmation instruction, the second management node Ga sends sensing target information to the first management node Gb.

This sensing target information may include the target object's state information. For example, the target object's state information may include position, speed, or trajectory of the target object.

In an optional embodiment, the second management node Ga may also send a sensing quality requirement for the target object to the first management node Gb.

In another embodiment, alternatively, the second management node may also return the sensing quality requirement for the target object to the first management node after receiving a request from the first management node requesting the sensing quality requirement for the target object.

At S605, the first management node Gb requests sensing capabilities and location information from each managed node within the communication domain B.

As shown in FIG. 6, the first management node Gb instructs the managed nodes Tbx within the communication domain B to report sensing capabilities and location information. In S605, Tbx may be the managed nodes Tb1, Tb2, Tb3, Tb4, or Tb5 within the communication domain B as shown in FIG. 4.

At S606, the first management node Gb obtains the sensing capabilities and location information reported by the managed nodes within the communication domain B.

At S607, based on the target object's state information and the sensing capabilities and location information of each managed node within the communication domain B, the first management node Gb determines, from the communication domain B, the managed nodes participating in sensing and configures the sensing configuration information for the determined managed nodes.

The first management node may determine the sensing configuration information required for the managed nodes using any currently common and unrestricted method. In another embodiment, alternatively, to more effectively sense the target object, the first management node may further configure sensing configuration information for the identified managed nodes by combining the target object's state information.

At S608, the first management node Gb sends the sensing task confirmation instruction to the second management node Ga.

This sensing task confirmation instruction may indicate that the first management node completes the configuration of the sensing configuration information.

At S609, based on the sensing configuration information configured for the managed nodes within the communication domain B, the first management node Gb receives or transmits the sensing signal between itself and the managed nodes within the communication domain B.

It should be noted that the order of S608 and S609 is not limited to that shown in FIG. 6. In practical applications, the order of S608 and S609 may be interchanged or executed synchronously without restriction.

At S610, in response to the sensing task confirmation instruction, the second management node Ga releases the resources within the communication domain A used for sensing the target object.

In a second possible application scenario, considering the mobility of managed nodes within a communication domain because of the development of short-range wireless communication technology, when a management node identifies a managed node as a managed node participating in sensing the target object and performs sensing of the target object within the management node's communication domain, the participating managed node may move from one communication domain to another.

When all managed nodes participating in sensing within a communication domain move, or when there is only one managed node participating in sensing in the communication domain, the movement of the managed nodes from one communication domain to another may inevitably prevent that communication domain from continuing wireless sensing of the target object, thus interrupting the sensing of the target object.

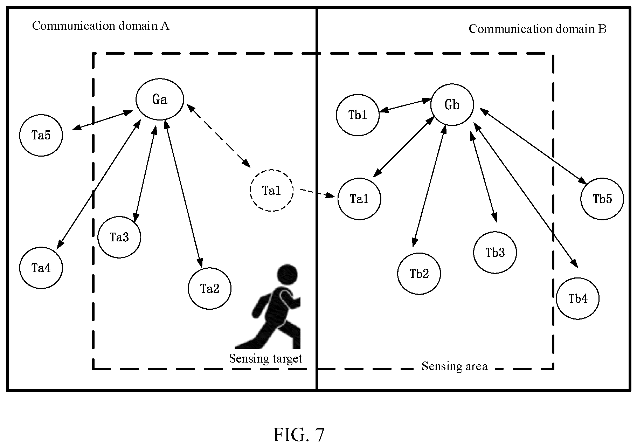

FIG. 7 illustrates an example scenario where a managed node moves from one communication domain to another in the scenario shown in FIG. 3.

As shown in FIG. 3, the managed node Ta1 was originally in the communication domain A and connected to the management node Ga. Furthermore, in the example scenario of FIG. 3, wireless sensing of the sensing target is performed within the communication domain A, and the managed node Ta1 is a managed node participating in sensing the target in the communication domain A.

Comparing FIG. 3 and FIG. 7, it can be seen that in the example scenario of FIG. 7, the managed node Ta1 moves from the communication domain A to the communication domain B where the managing node Gb resides.

Understandably, if only the managed node Ta1 is currently participating in sensing within the communication domain A, after Ta1 moves from the communication domain A to the communication domain B, the managing node Ga may not be able to continue wireless sensing of the sensing target within the communication domain A, resulting in an interruption of sensing capability.

Similarly, if multiple managed nodes are participating in sensing the target within the communication domain A and all of these managed nodes move to the communication domain B, the managing node Ga may also be unable to continue sensing the sensing target.

In the example scenarios of FIG. 3 and FIG. 7, the communication domain A is equivalent to the second communication domain, and the managing node Ga within the communication domain A is equivalent to the second managing node. The communication domain B is equivalent to the first communication domain, and the managing node Gb within the communication domain B is equivalent to the first managing node.

In this application scenario, to reduce the risk of interruption in the sensing of the target object (i.e., the sensing target), when the managed nodes participating in the sensing of the target object (Ta1 in FIG. 7) moves from the second communication domain to the first communication domain, historical sensing configuration information of the managed node may be transmitted to the first management node in the first communication domain through the second management node in the second communication domain, which allows the first management node in the first communication domain to reconfigure the sensing configuration information of the managed node based on the historical sensing configuration information, enabling both the first management node and the managed node to perform wireless sensing of the target object within the first communication domain, thereby reducing the risk of interruption in the wireless sensing of the target object.

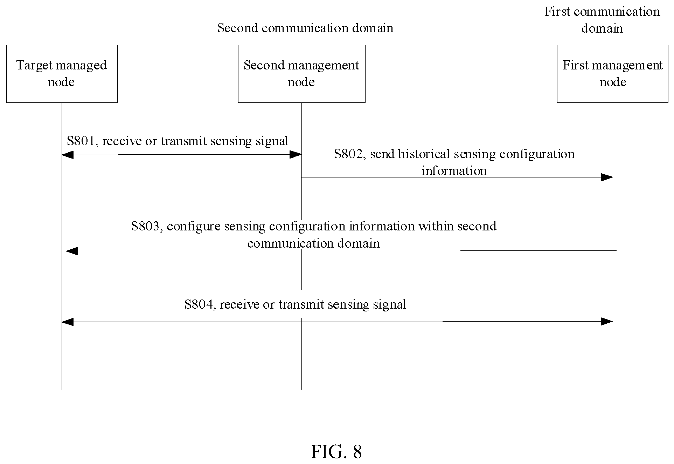

For the second application scenario, the following description is based on the flowchart in FIG. 8. FIG. 8 shows another flowchart of the wireless sensing method provided by another embodiment of the present disclosure. In this embodiment, the method may include S801 to S8404.

At S801, the second management node receives or sends, within the second communication domain, the sensing signal for sensing the target object.

For example, the second management node may send the sensing signal to the managed nodes within the second communication domain that participate in sensing the target object, or receive the sensing signal transmitted by the managed nodes within the second communication domain that participate in sensing the target object.

For example, as shown in FIG. 3, the management node Ga may transmit the sensing signal for sensing the target object to the managed node Ta1 to achieve wireless sensing of the target object.

At S802, the second management node detects that the link quality between a target managed node and the first management node within the first communication domain is better than the link quality between the target managed node and the second management node, and sends historical sensing configuration information to the first management node.

The target managed node may be a managed node within the second communication domain that participates in sensing the target object. The historical sensing configuration information may be the sensing configuration information configured by the second management node for the target managed node for sensing the target object.

The historical sensing configuration information may also include the signal type and transmission format of the sensing signal received or transmitted by the target managed node, as detailed above, and will not be repeated here.

It is understood that there may be multiple ways for the second management node to determine the link quality between the target managed node and the first and second management nodes, and the present disclosure does not have any limit on this.

In one possible embodiment, in the short-range wireless communication system, each management node may periodically or irregularly broadcast communication reference signals for signal measurement commands. Therefore, when a managed node within a communication domain may be able to receive the communication reference signals not only from the management node within that domain but also from other management nodes.

For any communication reference signal from a management node, the managed node may determine a signal quality measurement result based on the received signal reference signal. This measurement result may indicate the signal quality between the management node and the managed node. Accordingly, the managed node may send the signal quality measurement results between the managed node and each management node to the management nodes within its communication domain.

Correspondingly, a management node may determine the link quality between the managed node and each management node based on the signal quality measurement results transmitted by the managed node within the communication domain.

Therefore, the second management node may determine the link quality between the target managed node and the first management node, and the link quality between the target managed node and the second management node, based on the signal quality measurement results transmitted by the target managed node between the target managed node and the first management node, and the signal quality measurement results between the target managed node and the second management node. Furthermore, it may determine whether the link quality between the target managed node and the first managed node is better than the link quality between the target managed node and the second management node.

Of course, in some other embodiments, the second management node may also determine the link quality between the target managed node and the first and second managed nodes using other methods, without limitation.

When the link quality between the target managed node and the first management node is better than the link quality between the target managed node and the second management node, it may be indicated that the target managed node is closer to the first management node, which means that the target managed node moves from the second management node's second communication domain to the first management node's first communication domain.

As in the first scenario described above, for the first management node to participate in sensing the target object, the first management node's first communication domain may need to at least partially overlap with the sensing area of the target object.

In this embodiment, the second management node may interact with its neighboring management nodes to identify the first management node whose first communication domain overlaps with the sensing area of the target object. Therefore, if the second management node determines that the link quality between the target managed node, which has already connected to the second management node and is participating in sensing the target object, and the first management node is better, it may send the historical sensing configuration information of the target managed node to the first management node.

At S803, the first management node configures the sensing configuration information for the target managed node within the first communication domain based on the historical sensing configuration information.

As described above, the first management node obtaining the historical sensing configuration information of the target managed node transmitted by the second management node indicates that the target managed node enters the first communication domain of the first management node from the second communication domain. Therefore, for the first management node, the target managed node may belong to managed nodes that historically connected to the second management node within the second communication domain and participated in sensing the target object. It is understandable that after the target management node enters the first communication domain of the first management node, the target managed node may possess the conditions to be a managed node within the first communication domain. Therefore, for the first management node to continue wirelessly sensing the target object using the target managed node within the first communication domain, the first management node may need to configure the sensing configuration information for the target managed node.

It is understandable that, for the target managed node to quickly switch to wireless sensing of the target object within the first communication domain and to ensure the reliability of continued sensing of the target object, in one embodiment, the target managed node's sensing configuration information within the first communication domain may be updated by combining its historical sensing configuration information.

For example, when the target managed node's historical sensing configuration information is still applicable to sensing the target object within the first communication domain, the historical sensing configuration information may be directly determined as the target managed node's sensing configuration information within the first communication domain.

Alternatively, in another embodiment, the target managed node's historical sensing configuration information may be appropriately adjusted by combining the target managed node's historical sensing configuration information, the first management node's sensing capabilities, etc., to obtain updated sensing configuration information for the target managed node.

The present disclosure does not limit how the sensing configuration information of the target managed node within the first communication domain is determined.

In various embodiments, there may be one or more target managed nodes entering the first communication domain of the first management node, and the sensing configuration information for each target managed node may be configured in the manner described above, which will not be repeated here.

The first management node identifying a target managed node as a managed node participating in the sensing of target objects within the first communication domain may indicate that the target managed node is currently connected to the first management node and belongs to the managed nodes within the first communication domain.

For example, the target managed node may receive the communication reference signals transmitted by the first management node and the second management node. When it is determined that the signal quality of the communication reference signal of the first management node is better, the target managed node may apply to connect to the first management node.

As another example, the second management node may send a new domain access instruction to the target managed node when it detects that the link quality between the target managed node and the first management node is better than the link quality between the target managed node and the second management node. This new domain access instruction may be used to instruct the target managed node to connect to the first management node within the first communication domain. Correspondingly, in response to the new domain access instruction, the target managed node may send a node access request to the first management node. This node access request may request that the target node participating in sensing access the first management node. Upon receiving the node access request from the target managed node, the first management node may determine that the target managed node is a managed node within the first communication domain and belongs to the managed nodes of the sensing target object.

Of course, after detecting the node access request from the target managed node, the first management node may also determine whether the target managed node meets the access conditions for accessing the first management node according to the configured node access rules. When the access conditions are met, the target managed node may then have access to the first communication domain. The present disclosure does not limit how the target managed node is determined to meet the access conditions.

For the second management node to know that the first management node is now designated the target managed node as a managed node of the sensing target object within the first communication domain, the first management node may also send an access success instruction to the second management node upon confirming that the target managed node successfully accesses the first management node. The access success instruction may indicate that the target managed node is connected to the first management node.

Correspondingly, the second management node may send the target managed node's historical sensing configuration information to the first management node after receiving the access success instruction.

At S804, the first management node receives or sends the sensing signal for sensing the target object based on the sensing configuration information configured for the target managed node.

It is understood that, in this embodiment, the first management node may only consider the target managed node as a managed node participating in sensing the target object within the first communication domain.

While considering the target managed node as a managed node participating in sensing the target object within the first communication domain, the first management node may also determine other managed nodes participating in sensing the target object within the first communication domain. For other managed nodes participating in sensing the target object within the first communication domain besides the target managed node, the first management node may also configure sensing configuration information for these managed nodes, and the present disclosure does not limit the specific process.

In this embodiment, when the second management node detects that the link quality between the target managed node and the first management node within its second communication domain is better, the second management node may confirm that the target managed node moves into the first management node's first communication domain. Therefore, the second management node may send the target managed node's historical sensing configuration information to the first management node. Upon receiving this historical sensing configuration information, the first management node may configure the sensing configuration information for the target managed node within the first communication domain, which allows both the first management node and the target managed node to continue wireless sensing of the target object within the first communication domain, thus avoiding the situation where the target managed node cannot continue sensing the target object because of moving from the second communication domain to the first communication domain, and naturally reducing the possibility of interrupted sensing of the target object.

Understandably, in the second application scenario, to enable the managed node to promptly sense the target object within the first communication domain, and to ensure that the first communication domain is able to quickly assume the responsibility of sensing the target object, the managed node may proactively include its sensing capabilities and other information related to sensing the target object when initiating the node access request to the first management node. Correspondingly, the first management node may also combine the managed node's sensing capabilities and historical sensing configuration information to configure the sensing configuration information for the managed node.

To facilitate understanding of the second application scenario, the management node as the node G and the managed node as the node T, in conjunction with the scenario examples in FIG. 3 and FIG. 7, will be used as examples to illustrate the process interaction of the wireless sensing method in the second scenario.

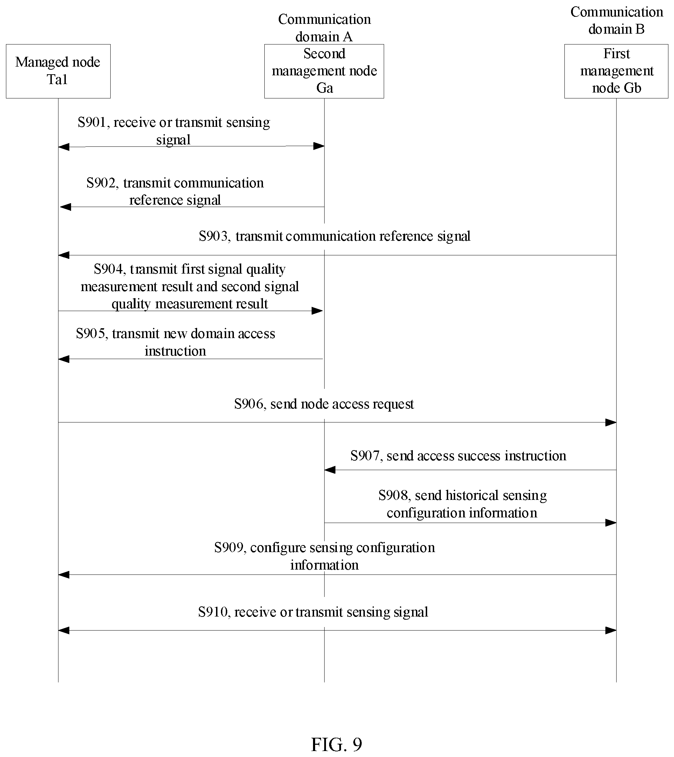

As shown in FIG. 9, which illustrates another process interaction diagram of the wireless sensing method in the second application scenario which may be applied to the wireless short-range communication system, in one embodiment, the method may include S901 to S910.

At S901, the second management node Ga receives or transmits, within the communication domain A, the sensing signal for sensing the target object.

In this embodiment, the communication domain A is the second communication domain where the second management node is located. The target object is the sensing target in FIG. 3 and FIG. 7.

At S902, the managed node Ta1 obtains the communication reference signal transmitted by the second management node Ga and determines a first signal quality measurement result between the managed node Ta1 and the second management node Ga.

The first signal quality measurement result may be determined by the managed node Ta1 based on the communication reference signal from the second management node. Furthermore, the first signal quality measurement result may characterize the signal quality between the managed node Ta1 and the second management node Ga.

At S903, the managed node Ta1 obtains the communication reference signal transmitted by the first management node Gb within the communication domain B, and determines a second signal quality measurement result between the managed node and the first management node Gb.

The second signal quality measurement result may be determined by the managed node Ta1 based on the communication reference signal from the first management node Gb. Furthermore, the second signal quality measurement result may characterize the signal quality between the managed node Ta1 and the first management node Gb.

At S904, the managed node Ta1 sends the first signal quality measurement result and the second signal quality measurement result to the second management node Ga.

In this embodiment, taking the scenarios of FIG. 3 and FIG. 7 as examples, in the application scenario shown in FIG. 3, the managed node participating in wireless sensing in the communication domain A of the second management node Ga is the managed node Ta1. At S904, the management node accessed by the managed node Ta1 is the second management node Ga, and the managed node Ta1 needs to send the measured signal quality measurement results to the second management node Ga.

AtS905, the second management node Ga, based on the first and second signal quality measurement results, determines that the link quality between the managed node Ta1 and the first management node Gb is better than the link quality between the managed node Ta1 and the second management node Ga, and sends a new domain access instruction to the managed node Ta1.

For example, when the signal quality represented by the first signal quality measurement result is better than the signal quality represented by the second signal quality measurement result, it may be determined that the link quality between the managed node Ta1 and the first management node Ga is better than the link quality between the managed node Ta1 and the second management node Ga.

The new domain access instruction may be used to instruct the managed node Ta1 to access the first management node Gb within the communication domain B.

In an optional embodiment, before S905, the second management node Ga may determine that the communication domain B of the first management node Gb overlaps with the sensing area of the target object.

Of course, in some other embodiments, the second management node may disregard whether the communication domain B overlaps with the sensing area of the target object and simply follow the operation of this embodiment. Only when the communication domain B overlaps with the sensing area of the target object, the first management node Gb within the communication domain B may return an access success instruction to the second management node Ga.

It is understandable that, in this embodiment using the scenarios of FIG. 3 and FIG. 7 as examples, in the example scenario of FIG. 3, the link quality between the managed node Ta1 and the first management node Gb is better, indicating that the managed node Ta1 moves to the communication domain B of the first management node Gb. Since there are currently no other managed nodes participating in wireless sensing within the communication domain A, wireless sensing of the sensing target is not able to continue within the communication domain A. Therefore, the managed node Ta1 may be determined as the target managed node.

Correspondingly, when the second management node Ga determines that the link quality between the managed node Ta1 and the first management node Gb is better than the link quality between the managed node Ta1 and the second management node Ga, the managed node Ta1 may be identified as the target managed node and the new domain access instruction may be transmitted to the managed node Ta1.

It should be noted that this embodiment illustrates an implementation where the link quality between the target managed node (managed node Ta1) and the first management node is superior to the link quality between the target managed node and the second management node. In practical applications, the link quality between the target managed node and both the first and second management nodes may be determined using other methods, which is not limited in the present disclosure.

At S906, the managed node Ta1 sends a node access request to the first management node Gb within the communication domain B.

This node access request node may be used to request a node participating in sensing the target object, to access the first management node.

It is understood that, for the first management node to know the management nodes currently accessed by the managed node Ta1, the node access request may also indicate the second management node Ga to which the managed node Ta1 currently belongs. For example, the node access request may include information such as the identifier or address of the second management node Ga.

Furthermore, the node access request may also indicate the sensing capabilities of the managed node Ta1.

In one embodiment, to ensure the first management node is able to promptly identify the target object being sensed by the managed node Ta1, the node access request may also indicate the target object being sensed by the managed node Ta1 (i.e., the target managed node). For example, the node access request may include name or location information of the target object, which is not limited in the present disclosure.

At S907, upon confirming that the managed node Ta1 successfully accesses the first management node Gb, the first management node Gb sends an access success instruction to the second management node Ga.

This access success instruction may indicate that the managed node Ta1 (i.e., the target managed node) successfully accesses the first management node.

At S908, the second management node Ga detects the access success instruction and sends historical sensing configuration information to the first management node Gb.

This historical sensing configuration information may be the sensing information configured by the second management node Ga for the managed node Ta1, used for sensing the target object. Details have been described above and will not be repeated here.

At S909, the first management node Gb configures the sensing configuration information for the managed node Ta1 within the communication domain B based on the managed node Tal's sensing capabilities and historical sensing configuration information.

For example, by combining the managed node Tal's sensing capabilities with the first management node's specific sensing capabilities, the first management node may update the managed node Tal's historical sensing configuration information to obtain the managed node Tal's sensing configuration information for sensing target objects within the communication domain B.

In one optional embodiment, the first management node may also obtain the sensing quality requirements of the target object. The specific method for obtaining these requirements can be found in the relevant description in the first application scenario above, and will not be repeated here.

Correspondingly, the first management node may also combine the sensing quality requirements, the managed node Tal's sensing capabilities, and historical sensing configuration information to configure the sensing configuration information for the managed node Ta1 within the communication domain B for sensing target objects.

At S910, the first management node Gb receives or transmits the sensing signal for sensing the target object based on the sensing configuration information configured for the managed node Ta1.

Correspondingly, the managed node Ta1 may also receive or transmit the sensing signal for sensing the target object within the first communication domain, according to the sensing configuration information configured for it by the first management node.

As shown in FIG. 3 and FIG. 7, in this embodiment, after the managed node Ta1, which is participating in sensing the target object within the communication domain A, moves to the communication domain B, the communication domain A may determine that the managed node Ta1 enters the communication domain B based on the signal quality measurement results reported by the managed node Ta1 with both the management node Ga and the management node Gb. Therefore, the management node Ga of the communication domain A may instruct the managed node Ta1 to access the management node Gb within the communication domain B as a sensing node participating in sensing the target object.

Once the management node Gb confirms that the managed node has successfully accessed the communication domain B as a sensing node, it may send the access success instruction to the management node Ga, which may cause the management node Ga to send the historical sensing configuration information of the managed node Ta1 to the management node Gb. The management node Gb may then use this historical sensing configuration information as a reference to configure the sensing configuration information for the managed node Ta1, which allows both the managed node Ta1 and the management node Gb to continue wirelessly sensing the target object within the communication domain B, reducing the possibility of the target object becoming unsensible because of the managed node moving out of the communication domain of the target object.

Corresponding to the wireless sensing method on the side of the first management node, the present disclosure also provides a wireless sensing device.

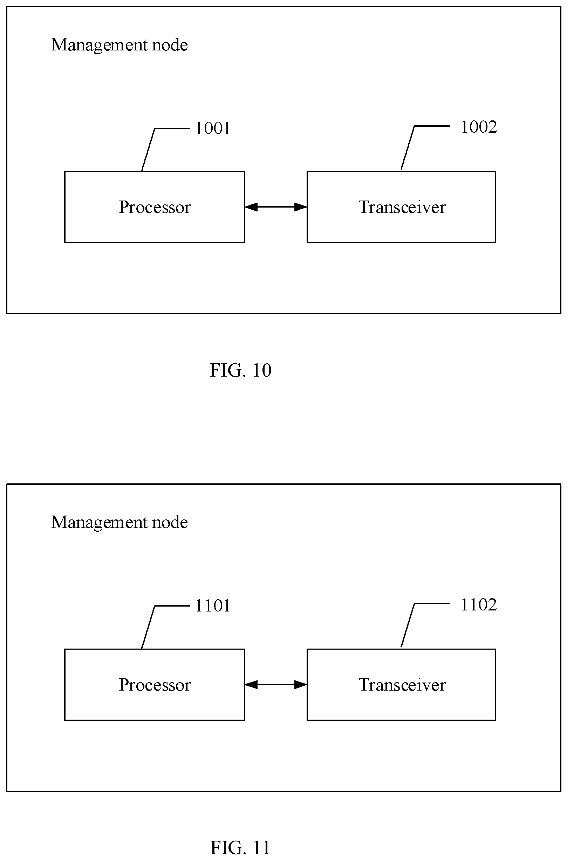

As shown in FIG. 10, which is a schematic structural diagram of a management node, the management node may be the first management node in the aforementioned short-range wireless communication system and located in the first communication domain. The management node includes a processor 1001 and a transceiver 1002.

The transceiver 1002 may be configured to obtain sensing information transmitted by a second management node in a second communication domain, where the sensing information is used to sense a target object, which is the object currently being sensed by the second management node.

The processor 1001 may be used to configure sensing configuration information for the managed node in the first communication domain based on the sensing information.

The transceiver 1002 may also be used to receive or send the sensing signal for sensing the target object based on the sensing configuration information configured for the managed node.

In a first possible scenario, when the transceiver receives the sensing information transmitted by the second management node within the second communication domain, the transceiver may obtain sensing target information transmitted by the second management node within the second communication domain. This sensing target information may include the state information of the target object.

When the processor configures the sensing configuration information for the managed node within the first communication domain based on the sensing information, the processor may configure the sensing configuration information for the managed node within the first communication domain based on the state information of the target object.

In an alternative scenario, when the processor configures the sensing configuration information for the managed node within the first communication domain based on the state information of the target object, the processor may determine at least one managed node within the first communication domain that participates in sensing the target object, and configure the sensing configuration information for that managed node.

In another alternative embodiment, in the first possible scenario, the transceiver may be further configured to receive sensing enable information transmitted by the second management node within the second communication domain, where the sensing enable information instructs the management node to sense the target object.

The processor may be further configured to, in response to the sensing enable information, send a response confirmation instruction to the second management node via the transceiver, where the response confirmation instruction indicates that the management node agrees to sense the target object.

The sensing target information may be transmitted by the second management node after receiving the response confirmation instruction.

In yet another alternative embodiment, in the first possible scenario, the transceiver may be further configured to send a sensing task confirmation instruction to the second management node, such that the second management node releases resources used for sensing the target object, where the sensing task confirmation instruction indicates that the management node has completed the configuration of the sensing configuration information.

In the second possible scenario, when the transceiver receives the sensing information transmitted by the second management node within the second communication domain, the transceiver may obtain historical sensing configuration information transmitted by the second management node within the second communication domain. This historical sensing configuration information may be the sensing configuration information configured by the second management node for the target managed node, and the target managed node may be a managed node that has historically accessed the second communication domain.

When the processor configures the sensing configuration information for the managed node within the first communication domain based on the sensing information, the processor may configure the sensing configuration information for the target managed node within the first communication domain based on the historical sensing configuration information.

In an alternative embodiment, for the second possible scenario, the transceiver may be further configured to obtain a node access request transmitted by the target managed node that has already accessed the second communication domain. This node access request may be used to request the node participating in sensing the target object, to access the management node.

In another optional embodiment, the node access request may further indicate the second management node to which the target managed node currently belongs.

Correspondingly, in the second possible scenario, the processor may be further configured to, upon confirming that the target managed node has successfully accessed the management node, send an access success instruction to the second management node via the transceiver.

When the transceiver obtains the historical sensing configuration information transmitted by the second management node within the second communication domain, the transceiver may be configured to obtain the historical sensing configuration information transmitted by the second management node in response to the access success instruction.

In yet another optional embodiment, the node access request may further indicate the sensing capability of the target managed node.

The processor may be specifically configured to configure the sensing configuration information for the target managed node based on the historical sensing configuration information and the sensing capability of the target managed node.

Corresponding to the wireless sensing method on the side of the second management node, the present disclosure also provides another management node. In one embodiment, as shown in FIG. 11, which is a schematic structural diagram of the management node, the management node may be located in the second communication domain and may include a processor 1101 and a transceiver 1102.

The transceiver 1102 may be configured to: receive or transmit the sensing signal for sensing the target object within the second communication domain; and, under the control of the processor, to transmit sensing information to the first management node within the first communication domain. The sensing information may be used to sense the target object, enabling the first management node to sense the target object within the first communication domain.

In a first possible scenario, the processor may be further configured to detect that the target object enters the first communication domain of the first management node and control the transceiver to transmit the sensing target information to the first management node. The sensing target information may include the target object's state information.

When receiving or transmitting the sensing signal for sensing the target object within the second communication domain, the transceiver may be configured to transmit the sensing target information to the first management node.

In an optional embodiment of the first possible scenario, the transceiver may be further configured to receive the sensing task confirmation instruction transmitted by the first management node. The confirmation instruction may indicate that the first management node completes the configuration of the sensing configuration information.

The processor may be further configured to, in response to the sensing task confirmation instruction, release sensing resources in the second communication domain used for sensing the target object.

In the first possible scenario, in another alternative embodiment, the transceiver may be further configured to, under the control of the processor, send the sensing enable information to the first management node, instructing the first management node to sense the target object.

The transceiver may be further configured to obtain a response confirmation instruction returned by the first management node in response to the sensing enable information.

The processor may be further configured, in response to the response confirmation instruction, to send sensing target information to the first management node via the transceiver, with the response confirmation instruction indicating that the first management node agrees to sensing the target object.

In the second possible scenario, the processor may be configured to detect that the link quality between the target managed node and the first management node within the first communication domain is better than the link quality between the target managed node and the management node, and instruct the transceiver to send the historical sensing configuration information to the first management node. The target managed node may be a managed node within the second communication domain participating in sensing the target object, and the historical sensing configuration information may be the sensing configuration information configured by the management node for the target managed node for sensing the target object.

When the transceiver sends the sensing information to the first management node within the first communication domain, the transceiver may be configured to send the historical sensing configuration information to the first management node.

In the second possible scenario, in one optional embodiment, the processor may be further configured to detect that the link quality between the target managed node and the first management node is better than the link quality between the target managed node and the management node, and instruct the transceiver to send a new domain access instruction to the target managed node. The new domain access instruction may be used to instruct the target managed node to access the first management node within the first communication domain.

In yet another optional embodiment, the transceiver may be further configured to receive an access success instruction transmitted by the first management node.

When instructing the transceiver to send the historical sensing configuration information to the first management node, the processor may be configured to instruct the transceiver to send the historical sensing configuration information to the first management node upon detecting the access success instruction transmitted by the first management node. The access success instruction may indicate that the target managed node successfully accesses the first management node.

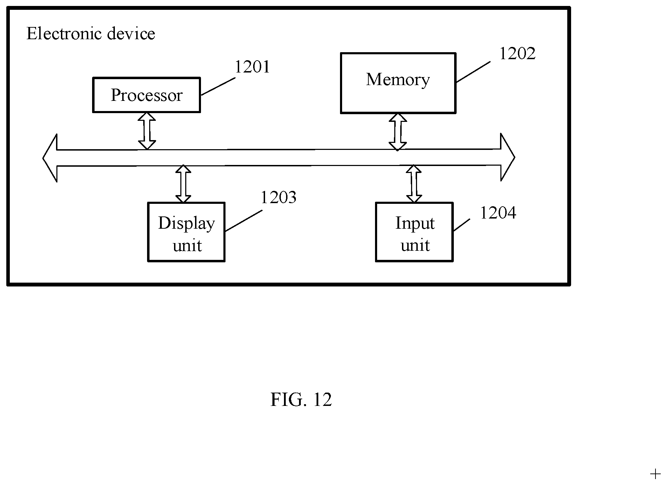

The present disclosure also provides an electronic device. As shown in FIG. 12, which is a schematic diagram of one possible structure of the electronic device, the electronic device may be either the first management node or the second management node in the preceding embodiments.

In one embodiment, the electronic device may include at least a processor 1201 and a memory 1202.

The processor 1201 may be configured to execute the wireless sensing method provided by any embodiments of the present disclosure.

The memory 1202 may be configured to store programs required for the processor to perform operations.

It is understood that the electronic device may also include a display unit 1203 and an input unit 1204.

The electronic device may have more or fewer components than those shown in FIG. 12, which is not limited in the present disclosure.

The present disclosure also provides a computer-readable storage medium storing at least one instruction, at least one program segment, a code set, or an instruction set. The at least one instruction, the at least one program segment, the code set, or the instruction set may be loaded and executed by a processor to implement the wireless sensing method provided by any embodiments of the present disclosure.

The present disclosure also provides a computer program including computer instructions stored in a computer-readable storage medium. The computer program, when running on an electronic device, may cause the electronic device to implement the wireless sensing method provided by any embodiments of the present disclosure.

In the present disclosure, terms "first," "second," "third," "fourth," etc. (if present) in the specification, claims, and accompanying drawings are used to distinguish similar parts and are not necessarily used to describe a specific order or sequence. It should be understood that such items may be interchanged where appropriate such that the embodiments of the present disclosure described herein can be implemented in a sequence other than that illustrated herein.

It should be noted that the various embodiments in the present disclosure are described in a progressive manner, with each embodiment focusing on the differences from other embodiments. Similar or identical parts between embodiments can be referred to mutually. Furthermore, the features described in the various embodiments of the present disclosure can be substituted or combined with each other, enabling those skilled in the art to implement or use the present disclosure. For apparatus embodiments, since they are substantially similar to method embodiments, the description is relatively simple, relevant parts may be referred to in the description of the method embodiments.

It should be noted that in this document, relational terms such as "first" and "second" are only used to distinguish one entity or operation from another entity or operation, and do not necessarily require or imply any such actual relationship or order between these entities or operations. Furthermore, the terms "comprising," "including," or any other variations thereof are intended to cover non-exclusive inclusion, such that a process, method, article, or apparatus that includes a list of elements may include not only those elements but also other elements not expressly listed, or elements inherent to such a process, method, article, or apparatus. Without further limitation, an element defined by the phrase "including one..." does not exclude the presence of other identical elements in the process, method, article, or apparatus that includes that element.

The embodiments of the present disclosure have been described above. However, these embodiments are merely illustrative and not intended to limit the scope of the present disclosure. Although various embodiments have been described above, this does not mean that the measures in the various embodiments cannot be used advantageously in combination. Various substitutions and modifications may be made by those skilled in the art in the absence of departing from the scope of the present disclosure, and all such substitutions and modifications should fall within the scope of the present disclosure.

## Claims

1. A wireless sensing method applied to a first management node in a wireless short-range communication system and located within a first communication domain, comprising:
obtaining sensing information transmitted by a second management node within a second communication domain, the sensing information being used to sense a target object currently being sensed by the second management node;
configuring sensing configuration information for one or more managed nodes in the first communication domain based on the sensing information; and
receiving or sending a sensing signal for sensing the target object based on the sensing configuration information.

2. The wireless sensing method according to claim 1, wherein:
obtaining the sensing information includes:
obtaining sensing target information transmitted by the second management node, the sensing target information including state information of the target object; and
configuring the sensing configuration information includes:
configuring the sensing configuration information for the one or more managed nodes based on the state information of the target object.

3. The wireless sensing method according to claim 2, wherein configuring the sensing configuration information for the one or more managed nodes based on the state information of the target object includes:
determining at least one managed node within the first communication domain that participates in sensing the target object based on the state information of the target object; and
configuring the sensing configuration information for the at least one managed node.

4. The wireless sensing method according to claim 2, further comprising:
obtaining sensing enable information transmitted by the second management node, the sensing enable information instructing the first management node to sense the target object; and
in response to the sending enable information, sending a response confirmation instruction to the second management node, the response confirmation instruction indicating that the first management node agrees to sense the target object;
wherein the sensing target information is transmitted by the second management node after obtaining the response confirmation instruction;
or,
further comprising:
sending a sensing task confirmation instruction to the second management node, to enable the second management node to release resources used for sensing the target object, the sensing task confirmation instruction indicating that the first management node has completed configuration of the sensing configuration information.

5. The wireless sensing method according to claim 1, wherein:
obtaining the sensing information includes:
obtaining historical sensing configuration information transmitted by the second management node, the historical sensing configuration information being configured by the second management node for a target managed node that historically accesses the second communication domain; and
configuring the sensing configuration information includes:
configuring the sensing configuration information for the target managed node within the first communication domain based on the historical sensing configuration information.

6. The wireless sensing method according to claim 5, further comprising:
obtaining a node access request transmitted by the target managed node that historically accesses the second communication domain, the node access request being used to request a node participating in sensing the target object to access the first management node and indicating the second management node to which the target managed node currently belongs; and
in response to confirming that the target managed node successfully accesses the first management node, sending an access success instruction to the second management node; and
obtaining the historical sensing configuration information includes:
obtaining the historical sensing configuration information transmitted by the second management node in response to the access success instruction.

7. The wireless sensing method according to claim 6, wherein:
the node access request further indicates a sensing capability of the target managed node; and
configuring the sensing configuration information includes:
configuring the sensing configuration information for the target managed node based on the historical sensing configuration information and the sensing capability of the target managed node.

8. A wireless sensing method applied to a second management node in a wireless short-range communication system and located within a second communication domain, comprising:
receiving or transmitting, within the second communication domain, a sensing signal for sensing a target object; and
sending sensing information to a first management node within a first communication domain to enable the management node to sense the target object within the first communication domain, the sensing information being used to sense the target object.

9. A management node within a first communication domain, comprising a processor and a transceiver, wherein
the transceiver is configured to obtain sensing information transmitted by a second management node within a second communication domain, the sensing information being used to sense a target object currently being sensed by the second management node;
the processor is configured to configure sensing configuration information for one or more managed nodes in the first communication domain based on the sensing information; and
the transceiver is further configured to receive or send a sensing signal for sensing the target object based on the sensing configuration information.

10. A management node within a second communication domain, comprising a processor and a transceiver, wherein
the transceiver is configured to: receive or transmit the sensing signal for sensing the target object within the second communication domain; and, under the control of the processor, to transmit sensing information to the first management node within the first communication domain, the sensing information being used to sense the target object, enabling the first management node to sense the target object within the first communication domain.
